# EUROPEAN PATENT SPECIFICATION

(11) **EP 2 741 623 B1**
(45) Date of publication and mention of the grant of the patent: **09.10.2019**
(21) Application number: 11870754.6
(22) Date of filing: 09.08.2011
(51) Int. Cl.: A23N 5/03, A47J 19/00, B65D 25/40, B65D 85/72

(54) **RESEALABLE SPOUT FOR SELECTIVELY ACCESSING COCONUT WATER WITHIN A COCONUT**
WIEDERVERSCHLIESSBARER AUSGIESSER ZUM SELEKTIVEN ZUGREIFEN AUF KOKOSNUSSWASSER IN EINER KOKOSNUSS
BEC VERSEUR LIBÉRABLE POUR ACCÉDER SÉLECTIVEMENT À L'EAU DE COCO À L'INTÉRIEUR D'UNE NOIX DE COCO

(43) Date of publication of application: 18.06.2014
(73) Proprietor: Depoo, Paul, Key West, FL 33040 (US)
(72) Inventor: Depoo, Paul, Key West, FL 33040 (US)
(74) Representative: Michalski Hüttermann & Partner Patentanwälte mbB
(86) International application number: PCT/US2011/047147
(87) International publication number: WO 2013/022439

(56) References cited:
- CN-U- 201 501 627
- FR-A1- 2 776 270
- FR-A1- 2 867 162
- US-A- 5 016 389
- US-A1- 2004 071 846
- US-A1- 2004 182 871
- US-A1- 2010 124 595

## Description

### BACKGROUND OF THE INVENTION

### Technical Field of the Invention

The document FR 2776270 discloses a device and method for accessing and removing the sterile water within a coconut.

The present invention relates generally to spigots and, more specifically, to a spigot for a coconut that provides easy access by consumers to the sterile coconut water within a coconut. The spigot is comprised of a conduit having a spike-tip on one end and a spout on the other with a through bore therebetween. A retaining ring is also provided as a stop for the spigot. A spigot cap is placed over the spigot and covered with a protective member.

The coconut having a spigot is provided to the consumer whereby the consumer gains access to the sterile coconut water by pushing the partially inserted spigot to its seated position.

Initially the spigot is inserted through the husk and into the coconut meat having a length of un-inserted conduit extending from the exterior. The spigot remains within the coconut meat until time of use maintaining the sterile condition of the coconut water until selective consumption by the consumer.

The present invention further provides for an optional air vent and straw that optionally provides for a filter to prevent pulp from being drawn into the straw.

Further provided are the additional elements of a coconut stand and handle mountable to the coconut and a spigot having a plunger movable from a fluid blocking position within the spigot to an unblocking position so that the coconut water can be poured into a glass.

### SUMMARY OF THE INVENTION

A primary object of the present invention is to provide spigot access to the coconut water within a coconut.

Another object of the present invention is to provide access to coconut water within a coconut by initially inserting the spigot through the husk and into the coconut meat without piercing the coconut water cavity.

Yet another object of the present invention is to provide a spigot having a cap that is placed over the partially inserted spigot to prevent casual displacement of the spigot during shipping and handling.

Still yet another object of the present invention is to provide a spigot a protective member serving as a tamper evident seal.

An additional object of the present invention is to provide easy access by consumers to the coconut water within a coconut without compromising its sterile contents.

A further object of the present invention is to provide a spigot that will provide access to the coconut water within a coconut by a consumer pressing the spigot through the remained of the coconut meat and into the coconut water cavity.

A yet further object of the present invention is to provide an optional air vent having a resealable aperture.

A still further object of the present invention is to provide a straw that may have a filter on one end to prevent pulp from being drawn in.

Another object of the present invention is to provide a stand for a coconut.

Yet another object of the present invention is to provide a handle attachable to a coconut.

Still yet another object of the present invention is to provide a spigot having a plunger that is movable from a blocking position to an unblocking position so that the coconut water can be poured into a glass.

The foregoing and related objects are achieved by the features of the independent claims. Preferred embodiments are defined by the features of the dependent claims. The present invention provides a resealable spout for selectively accessing coconut water within a coconut having a spigot for a coconut that allows easy access by consumers to the sterile coconut water within a coconut. The spigot is comprised of a conduit having a lance on one end and a flange on the other having a through bore therebetween. A retaining ring is provided as a stop for the spigot. A spigot cap is placed over the spigot and covered with a protective member. The coconut having a spigot is provided to the consumer whereby the consumer gains easy access to the sterile coconut water by pushing the partially inserted spigot to its seated position.

More particularly, the spigot of the present invention is preferably comprised of a valve seat positioned within a coconut aperture and a plunger sleeve positioned within the valve seat. The plunger sleeve has a based positioned membrane that seals the coconut aperture. A plunger-stopper is tethered to the plunger sleeve for shipping and storage and is used by the consumer to pierce the plunger sleeve membrane to gain access to the coconut water. The plunger sleeve is also used to reseal the coconut aperture to preserve any remaining coconut water for future consumption.

Further provided is an additional, preferred embodiment for a spigot comprising a conduit having a spike-tip on one end and a spout on the other with a through bore therebetween. The coconut having a partially inserted spigot is provided to the consumer whereby the consumer gains access to the sterile coconut water by pushing the partially inserted spigot to its seated position with a grommet provided as an insertion stop for the spigot. An optional air vent is provided to aid in fluid flow from the spigot.

Other objects and features of the present invention will become apparent when considered in combination with the accompanying drawing figures which illustrate certain preferred embodiments of the present invention. It should, however, be noted that the accompanying drawing figures are intended to illustrate only certain embodiments of the claimed invention and are not intended as a means for defining the limits and scope of the present invention.

### BRIEF DESCRIPTION OF THE DRAWING FIGURES

In the drawing, wherein similar reference numerals and symbols denote similar features throughout the several views:
FIG. 1 is a sectional view of a coconut with and without the coconut husk providing means for accessing the coconut water when desired;
FIG. 2 is an exemplary view of the present invention in use;
FIG. 3 is an elevational, sectional view of the coconut spigot partial inserted into a coconut;
FIG. 4 is an elevational, sectional view of the coconut spigot partial inserted into a coconut;
FIG. 5 is an elevational, sectional view of the coconut spigot partial inserted into a coconut with spigot cap removed;
FIG. 6 is an elevational, sectional view of the coconut spigot inserted into the coconut water cavity.
FIG. 7 is an elevational, sectional view of the coconut spigot partially inserted into the coconut;
FIG. 8 is an elevational, sectional view of the coconut spigot partial inserted into a coconut;
FIG. 9 is an elevational, sectional view of the coconut spigot partially inserted into the coconut;
FIG. 10 is an elevational, sectional view of the coconut spigot fully inserted into the coconut cavity;
FIG. 11 is an exemplary view of the present invention in use;
FIG. 12 is an exemplary view of the present invention in use;
FIG. 13 is an elevational, sectional view of the coconut spigot partial inserted into a coconut;
FIG. 14 is an elevational, sectional view of the coconut spigot partial inserted into a coconut; FIG. 15 is an elevational, sectional view of the coconut spigot partial inserted into a coconut with cap removed;
FIG. 16 is an elevational, sectional view of the coconut spigot inserted into the coconut water cavity;
FIG. 17 is an elevational, sectional view of the coconut spigot partially inserted into the coconut;
FIG. 18 is an elevational, sectional view of the coconut spigot partially inserted into the coconut;
FIG. 19 is an elevational, sectional view of the coconut spigot partially inserted into the coconut;
FIG. 20 is an elevational, sectional view of the coconut spigot fully inserted into the coconut cavity;
FIG. 21 is an elevational, sectional view of the coconut spigot inserted into the coconut water cavity;
FIG. 22 is an elevational, sectional view of the coconut spigot inserted into the coconut water cavity;
FIG. 23 is an elevational, sectional view of a coconut having a straw with slits and a closed end;
FIG. 24 is an exemplary view of a stand and handle for a coconut;
FIG. 25 is a prospective, exemplary of an alternate embodiment not covered by the claims;
FIG. 26 is a prospective, exemplary view of the plunger-stopper providing access to the coconut water not covered by the claims;
FIG. 27 is an elevational, exemplary view of the resealable spout in use not covered by the claims;
FIG. 28 is a prospective, exemplary view of the coconut resealed for future consumption not covered by the claims;
FIG. 29 is an exploded, elevational view of an alternate embodiment not covered by the claims; and,
FIG. 30 is an exploded, elevational view of an alternate embodiment not covered by the claims.

### DETAILED DESCRIPTION OF THE PREFERRED EMBODIMENTS AND DRAWING FIGURES

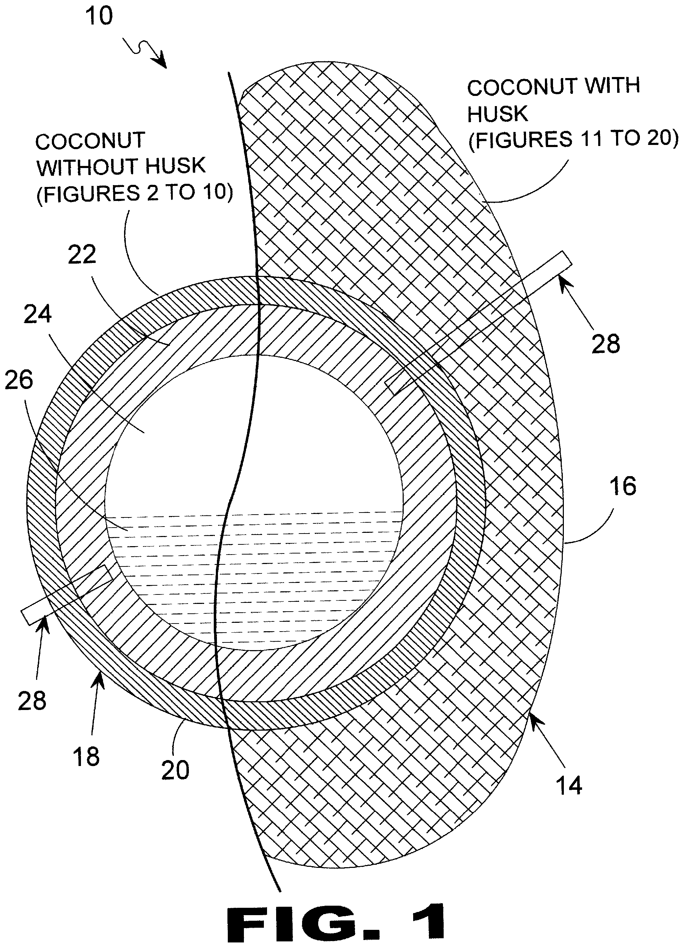

Turning now, in detail, to an analysis of the drawing figures, FIG. 1 is a sectional view of a coconut with and without the coconut husk providing means for accessing the coconut water when desired. The present invention 10 provides a spigot28 that is partially inserted into the coconut meat 22 and then shipped to consumers who then complete inserting the spigot 28 through the coconut meat 22 into the coconut cavity 24 providing access to the sterile coconut water 26. As illustrated, the present invention provides that the spigot 28 can be used with coconuts 14 having husk 16 or with the husk removed leaving the coconut seed having coconut seed-case 20.

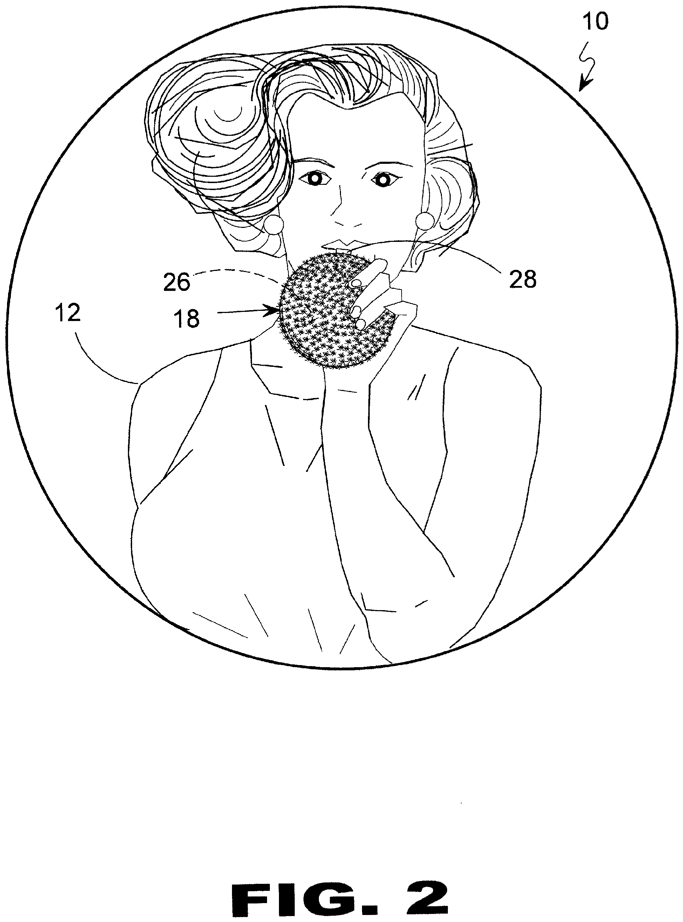

FIG. 2 illustrates the present invention 10, which provides a spigot 28 that is partially imbedded into a coconut seed 18 so that a consumer 12 can gain access to the coconut water 26 by completing the insertion of the spigot 28 through the coconut meat.

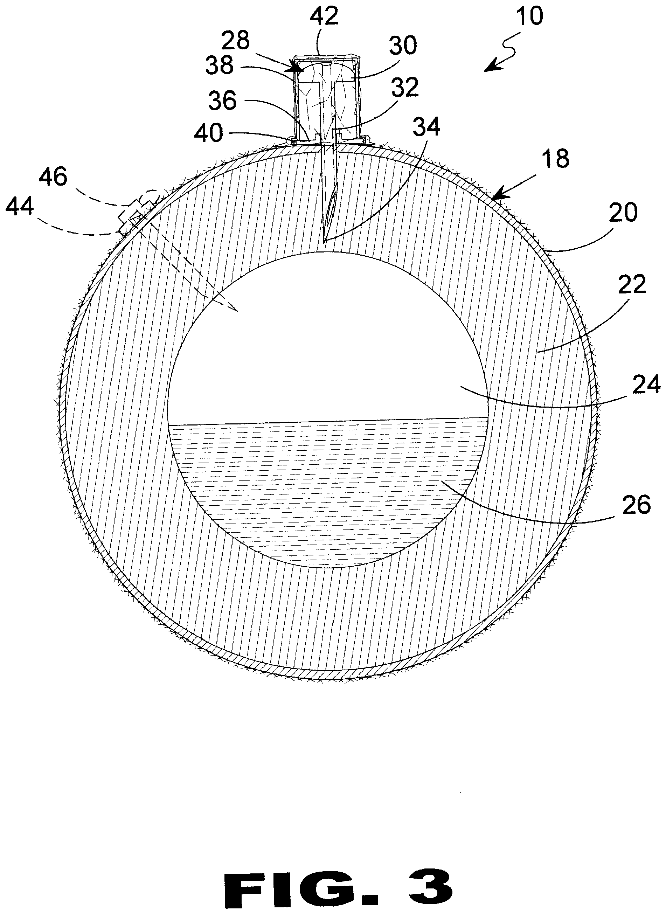

FIG. 3 is a sectional view of the coconut spigot partial inserted into a coconut showing the present invention 10 as having means for a consumer to easily extract coconut water 26 from coconut cavity 24 by partially inserting a spigot 28 comprising spout 30, conduit 32 having spike-tip 34 through grommet 36 and coconut seed 18 having coconut seed-case 20 and into the coconut meat 22 and then covering the spigot 28 with spigot cap 38 having flange 40 frictionally engaging grommet 36 and a protective member in cap seal 42. Alternately provided is air val e 44 having tethered bung 46 for bleeding air into the coconut cavity 24 as the coconut water 26 is removed.

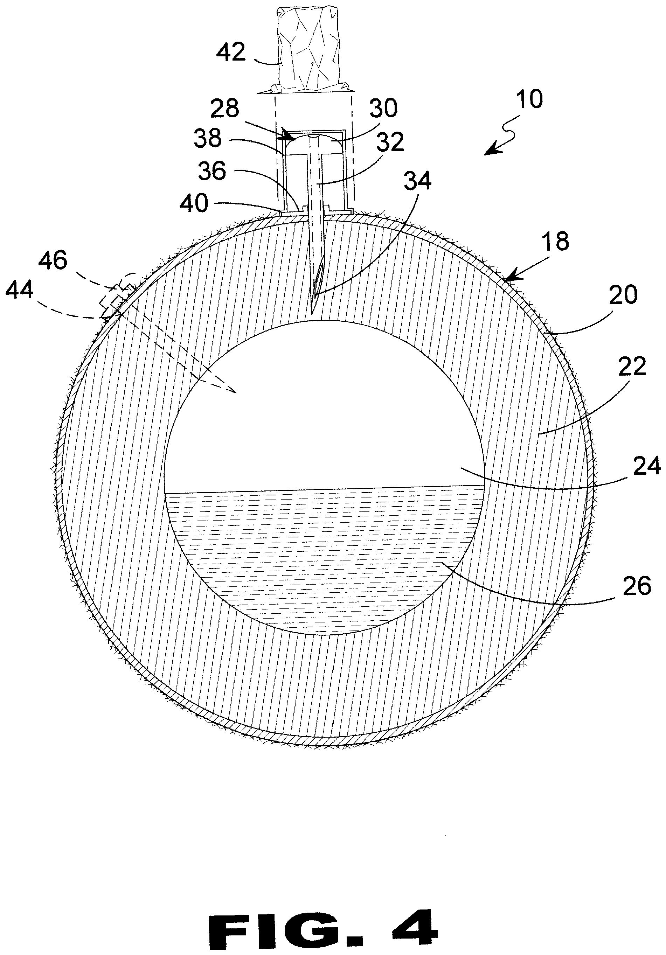

FIG. 4 is a sectional view of the coconut spigot partial inserted into a coconut. Illustrated is the cap seal 42 removed from its seated position. Cap seal 42 serves as a tamper evident covering for the consumer and to prevent contamination of the spigot cap 38 prior to consumer access. The present invention 10 provides means for a consumer to easily extract coconut water 26 from coconut cavity 24 by partially inserting spigot 28 comprising spout 30, conduit 32 having spike-tip 34 through grommet 36 and coconut seed 18 having coconut seed-case 20 and into the coconut meat 22 and then covering the spigot 28 with spout cap 38 having flange 40 frictionally engaging grommet 36 and a protective member 42. Alternately provided is air valve 44 having tethered bung 46 for bleeding air into the coconut cavity 24 as the coconut water 26 is removed.

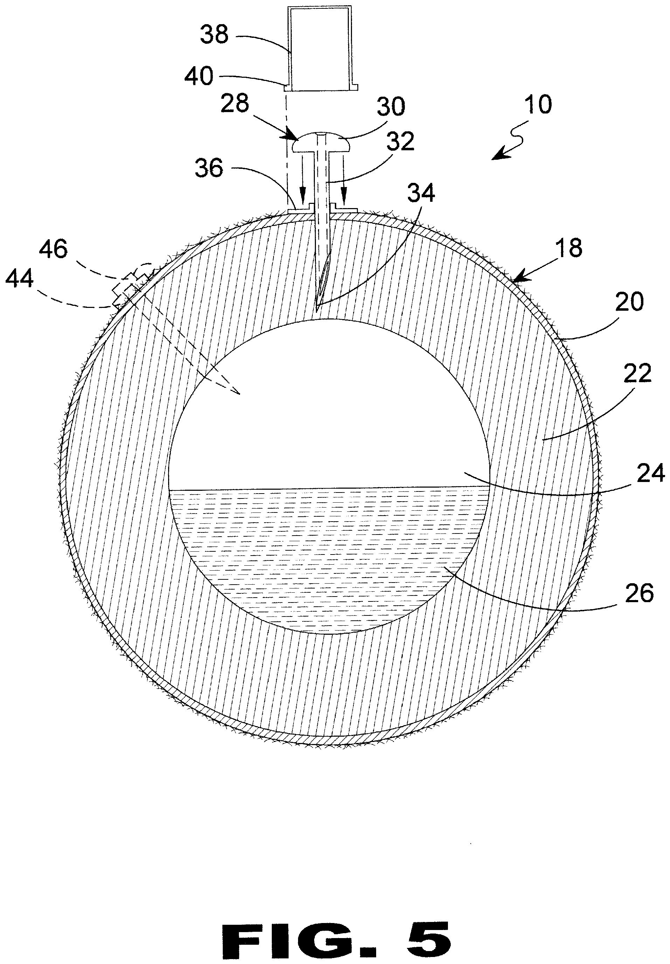

FIG. 5 is a sectional view of the coconut spigot partial inserted into a coconut with spigot cap removed. With the cap seal removed the spigot cap 38 having flange 40 frictionally engaging grommet 36 is removed providing access to spigot 28, comprising spout 30, conduit 32 terminating in spike-tip 34 that has been positioned within coconut meat 22 of coconut seed 18 having coconut seed-case 20 wherethen the consumer can easily push spigot 28 through the remainder of coconut meat 22 into the coconut water cavity 24 thereby having access to the sterile coconut water 26. Alternately provided is air valve 44 having tethered bung 46 for bleeding air into the coconut cavity 24 as the coconut water 26 is removed.

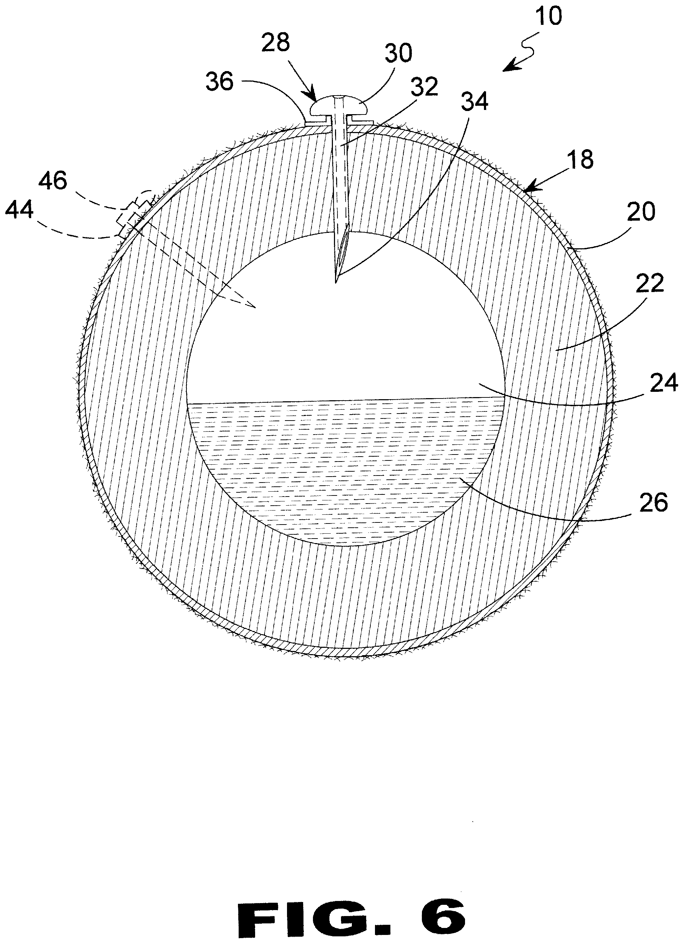

FIG. 6 is a sectional view of the coconut spigot inserted into the coconut water cavity. Illustrated is spigot 28 comprising spout 30 and conduit 32 terminating in spike- tip 34 fully inserted through coconut meat 22 into the coconut cavity 24 of coconut seed 18 having coconut seed-case 20 thereby providing access to coconut water 26. Grommet 36 serves as attachment for the spigot cap and as a stop for completing the insertion of spigot 28 into coconut cavity 24.

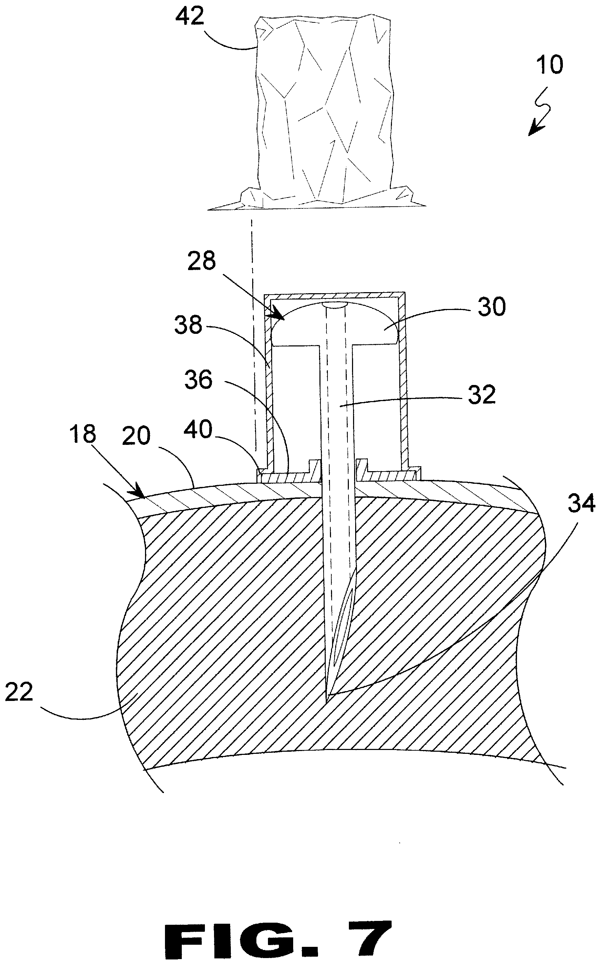

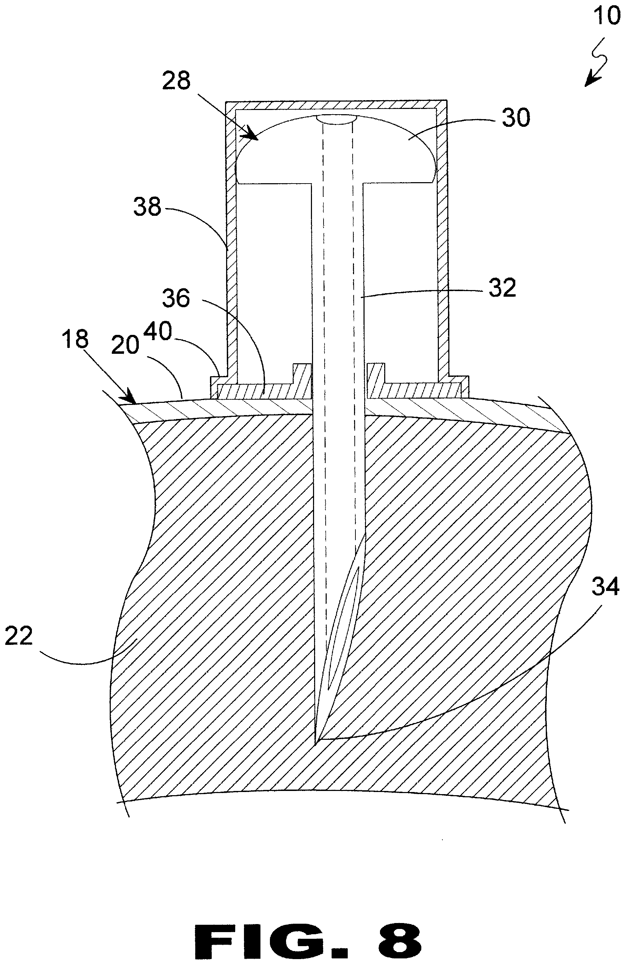

FIG. 7 is a sectional view of the coconut spigot partially inserted into the coconut. Illustrated is the cap seal 42 removed from its seated position. Cap seal 42 serves as a tamper evident covering for the consumer and to prevent contamination of the spigot cap 38 prior to consumer access. The present invention 10 provides means for a consumer to easily extract coconut water via partially inserting spigot 28 comprising spout 30, conduit 32 having spike-tip 34 through grommet 36 and coconut seed 18 having coconut seed- case 20 and into the coconut meat 22 and then covering the spigot 28 with spout cap 38 having flange 40 frictionally engaging grommet 36 and a protective member 42. FIG. 8 is a sectional view of the coconut spigot partial inserted into a coconut. Shown is the cap seal removed from spigot cap 38 with flange 40 frictionally engaging grommet 36 preventing casual displacement of spigot 28 during shipping and handling. Spigot 28 is comprised of spout 30 and conduit 32 terminating in spike-tip 34. Spigot 28 is inserted trough grommet 36 into coconut seed 18 having coconut seed-case 20 until spike-tip 34 is imbedded in coconut meat 22 without compromising the coconut cavity having the coconut water therein.

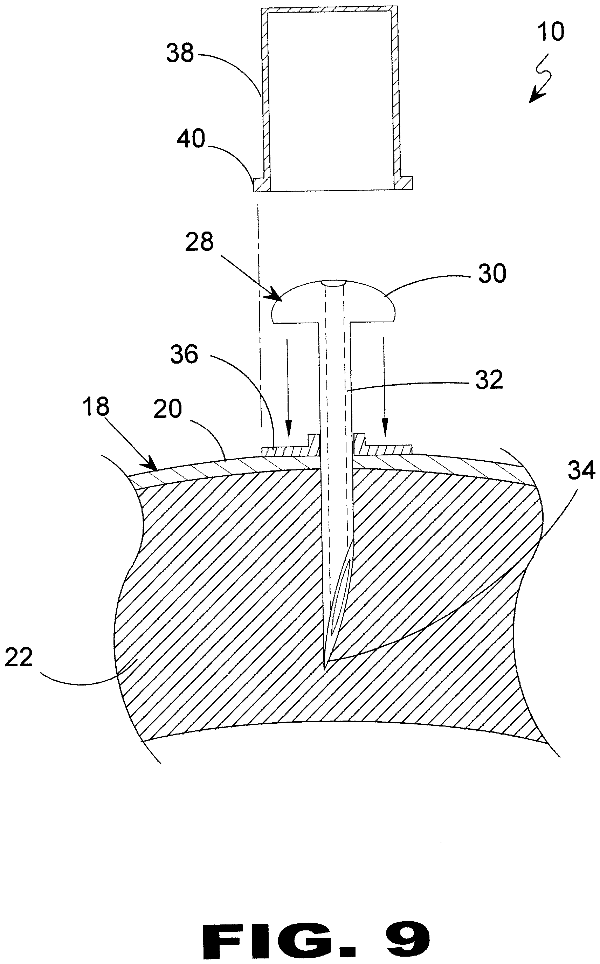

FIG. 9 is a sectional view of the coconut spigot partially inserted into the coconut. Illustrated is the cap seal and spigot cap 38 having flange 40 removed from its frictional engagement with grommet 36 thereby providing access to spigot 28, comprising spout 30, conduit 32 terminating in spike-tip 34 that has been positioned within coconut meat 22 of coconut seed 18 having coconut seed-case 20 wherethen the consumer can easily push spigot 28 through the remainder of coconut meat 22 into the coconut water cavity to access the sterile coconut water.

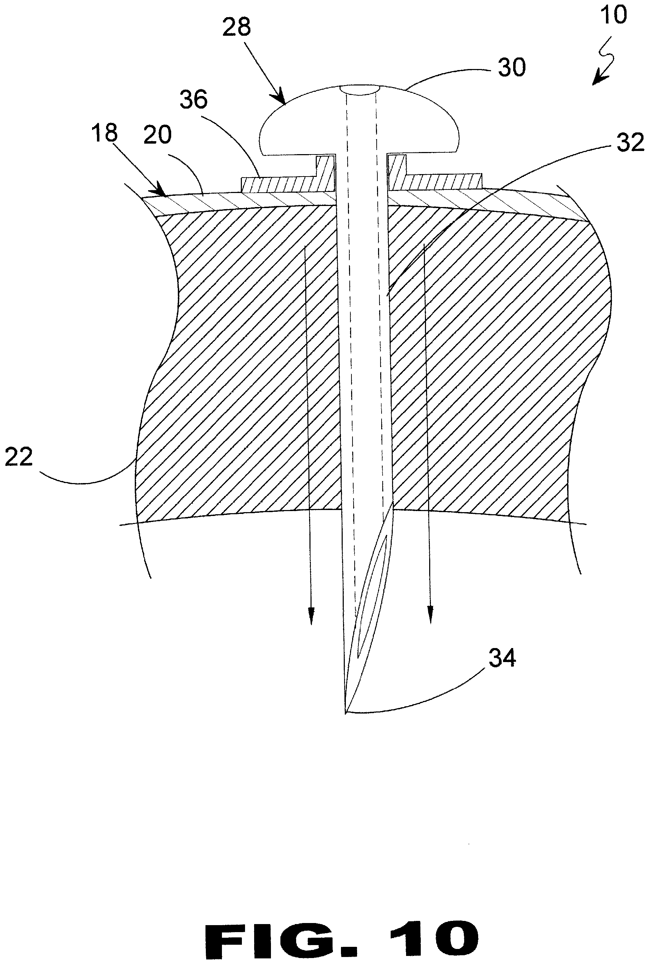

FIG. 10 is a sectional view of the coconut spigot fully inserted into the coconut cavity. Illustrated is spigot 28 comprising spout 30 and conduit 32 terminating in spike- tip 34 fully inserted through coconut meat 22 into the coconut cavity of coconut seed 18 having coconut seed-case 20 thereby providing access to coconut water. Grommet 36 serves as attachment for the spigot cap and as a stop for completing the insertion of spigot 28 by the consumer into the coconut cavity.

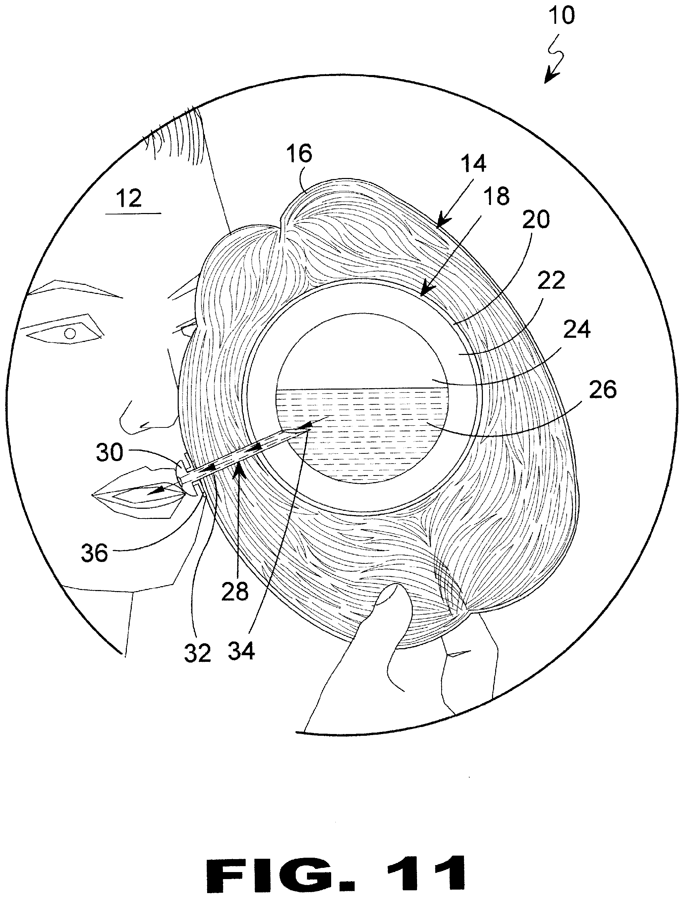

FIG. 11 is an exemplary view of the present invention in use, in which the present is shown as including a spigot 28 that is partially imbedded into a coconut 14 having coconut husk 16 so that a consumer 12 can gain access to the coconut water 26 by completing the insertion of the spigot 28 through the coconut meat 22 into coconut cavity 24. Coconut 14 has coconut husk 16 encasing coconut seed 18 having seed-case 20. The present invention provides for the present invention with husk 16 or without husk 16 as previously illustrated. Grommet 36 is placed on coconut husk 16 and spigot 28 is inserted through husk 16 and coconut seed 18 having seed-case 20 into coconut meat 22 so that consumer 12 can easily complete the spigot insertion into coconut cavity 24 to access coconut water 26.

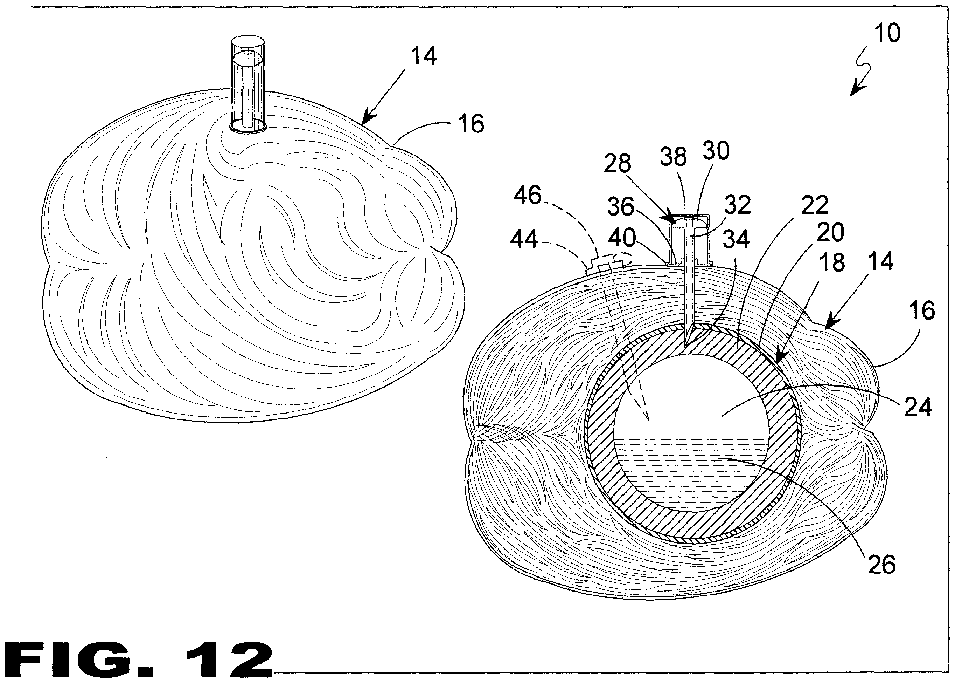

FIG. 12 is an exemplary view of the present invention 10 as including means for a consumer to easily extract the coconut water 26 of coconut 14 from coconut cavity 24 by partially inserting a spigot 28 comprising spout 30, conduit 32 having spike-tip 34 through grommet 36, coconut husk 16, coconut seed 18 having coconut seed-case 20 and into the coconut meat 22 and then covering spigot 28 with spigot cap 38 having flange 40 frictionally engaging grommet 36 and a cap seal. Alternately provided is air valve 44 having tethered bung 46 for bleeding air into the coconut cavity 24 as the coconut water 26 is removed.

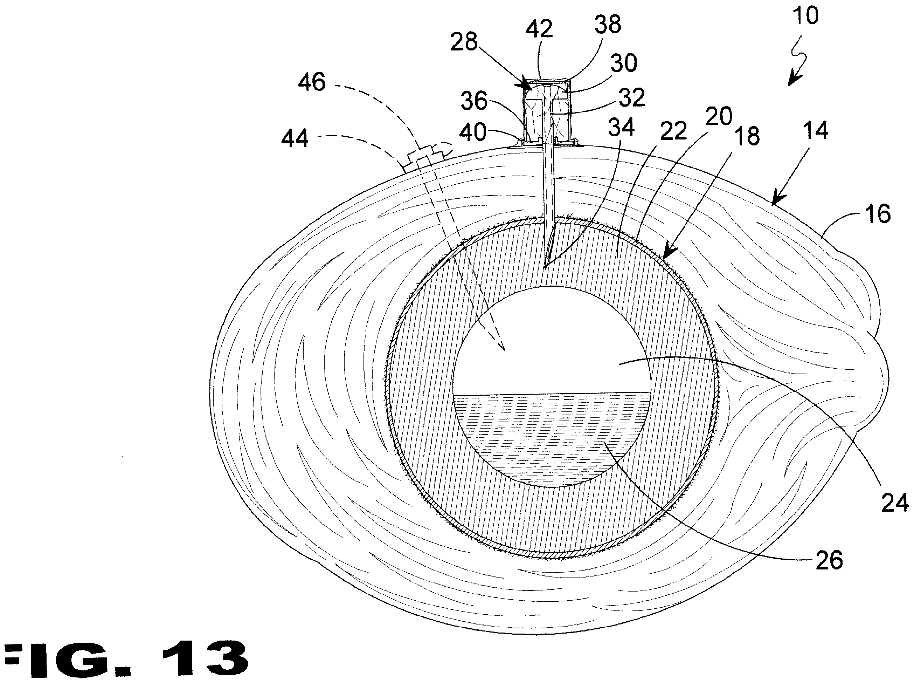

FIG. 13 is a sectional view of the coconut spigot partial inserted into a coconut. The present invention 10 provides means for a consumer to easily extract coconut water 26 from coconut 14 having husk 16 by partially inserting a spigot 28 comprising spout 30, conduit 32 having spike-tip 34 through grommet 36, coconut husk 16 and coconut seed 18 having coconut seed-case 20 and into the coconut meat 22 and then covering the spigot 28 with spigot cap 38 having flange 40 frictionally engaging grommet 36 and a protective member in cap seal 42. Alternately provided is air valve 44 having tethered bung 46 for bleeding air into the coconut cavity 24 as the coconut water 26 is removed.

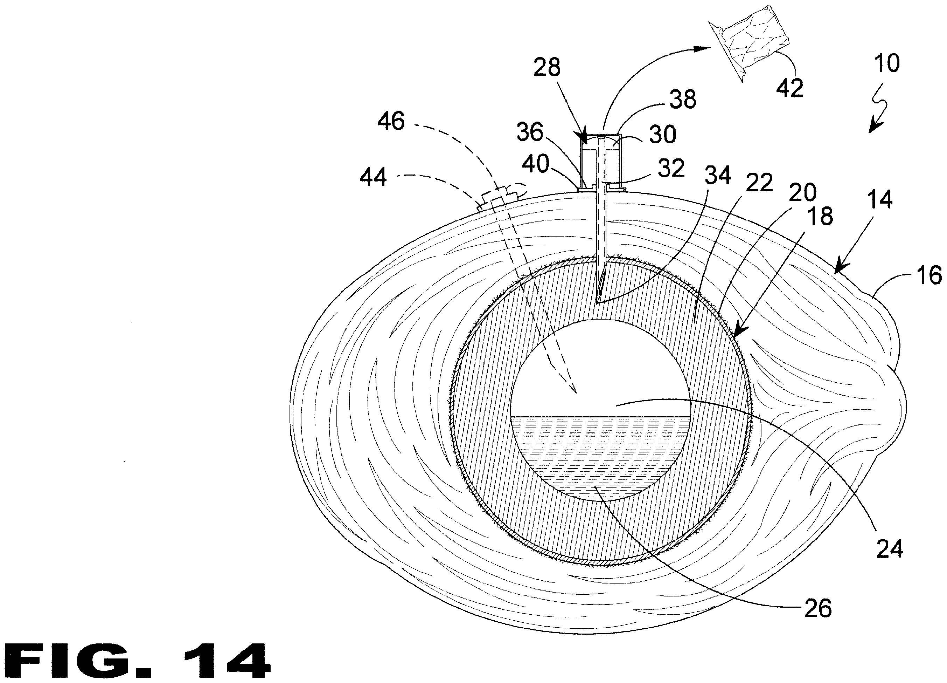

FIG. 14 is a sectional view of the coconut spigot partial inserted into a coconut. Illustrated is the cap seal 42 removed from its seated position. Cap seal 42 serves as a tamper evident covering for the consumer and to prevent contamination of the spigot cap 38 prior to consumer access. The present invention 10 provides means for a consumer to easily extract coconut water 26 from coconut cavity 24 by partially inserting spigot 28 comprising spout 30, conduit 32 having spike-tip 34 through grommet 36 into coconut 14 having coconut husk 16 and coconut seed 18 having coconut seed-case 20 and into the coconut meat 22 and then covering the spigot 28 with spout cap 38 having flange 40 frictionally engaging grommet 36 and a protective member 42. Alternately provided is air valve 44 having tethered bung 46 for bleeding air into the coconut cavity 24 as the coconut water 26 is removed.

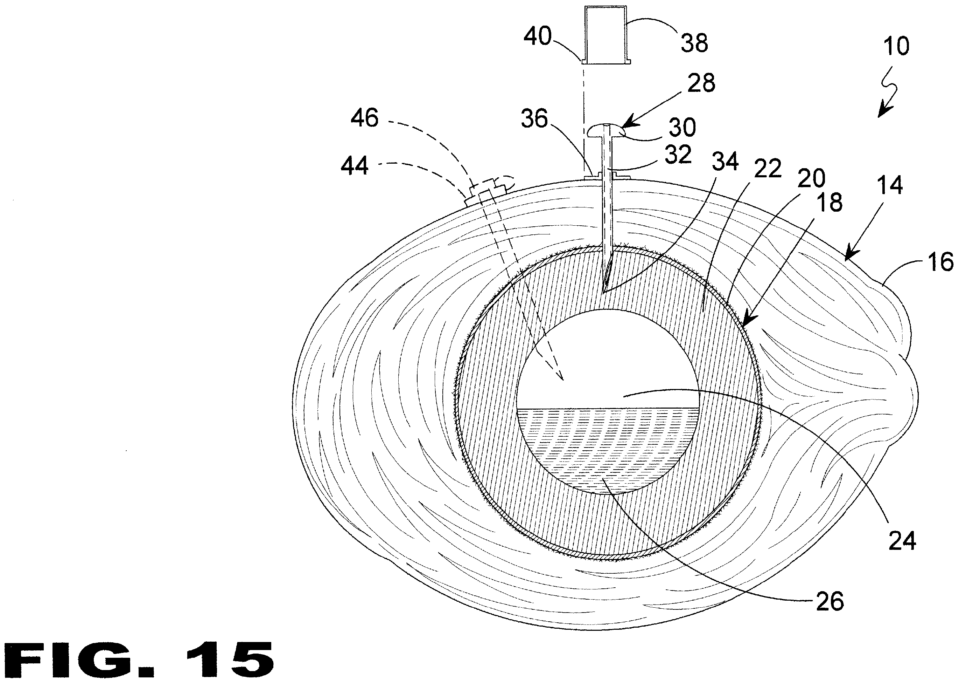

FIG. 15 is a sectional view of the coconut spigot partial inserted into a coconut with cap removed. With the cap seal removed the spigot cap 38 having flange 40 frictionally engaging grommet 36 is removed providing access to spigot 28, comprising spout 30, conduit 32 terminating in spike-tip 34 that has been positioned within coconut meat 22 of coconut 14 having husk 16 and coconut seed 18 having coconut seed-case 20 wherethen the consumer can easily push spigot 28 through the remainder of coconut meat 22 into the coconut water cavity 24 thereby having access to the sterile coconut water 26. Alternately provided is air valve 44 having tethered bung 46 for bleeding air into the coconut cavity 24 as the coconut water 26 is removed.

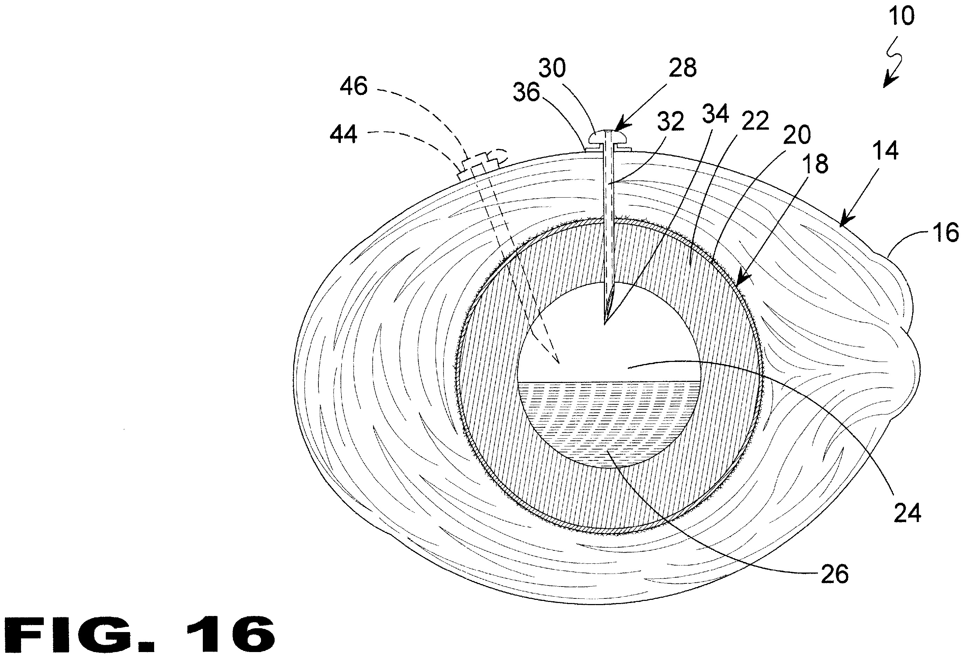

FIG. 16 is a sectional view of the coconut spigot inserted into the coconut water cavity. Illustrated is spigot 28 comprising spout 30 and conduit 32 terminating in spike- tip 34 fully inserted through coconut meat 22 into the coconut cavity 24 of coconut 14 having husk 16 encompassing coconut seed 18 having coconut seed-case 20 thereby providing access to coconut water 26. Grommet 36 serves as attachment for the spigot cap and as a stop for completing the insertion of spigot 28 into coconut cavity 24.

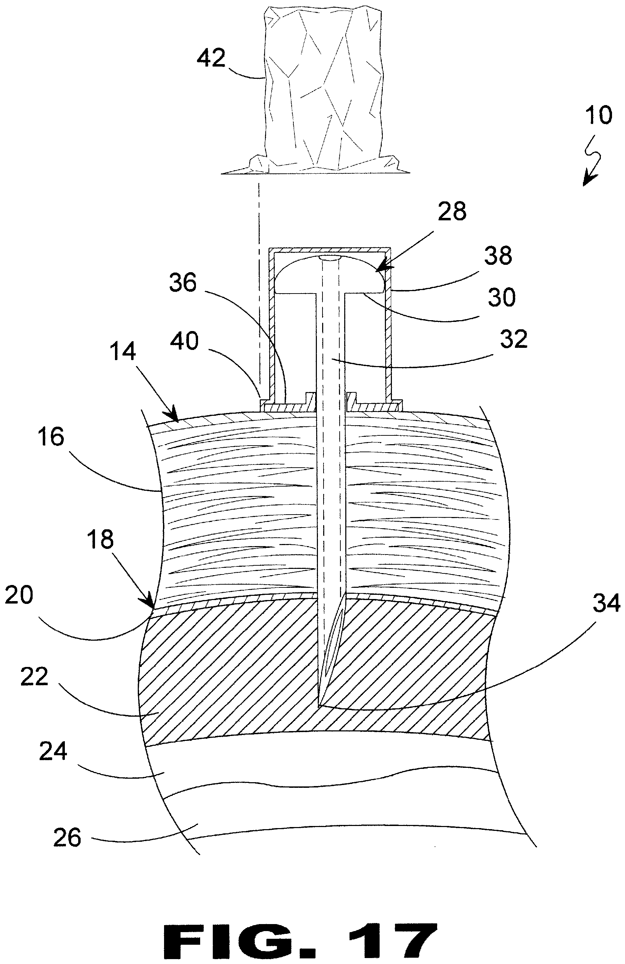

FIG. 17 is a sectional view of the coconut spigot partially inserted into the coconut. Illustrated is the cap seal 42 removed from its seated position. Cap seal 42 serves as a tamper evident covering for the consumer and to prevent contamination of the spigot cap 38 prior to consumer access. The present invention 10 provides means for a consumer to easily extract coconut water via partially inserting spigot 28 comprising spout 30, conduit 32 having spike-tip 34 positioned through grommet 36 situated on coconut 14 husk 16 encompassing coconut seed 18 having coconut seed-case 20 and into the coconut meat 22 and then covering the spigot 28 with spout cap 38 having flange 40 frictionally engaging grommet 36 and covered by cap seal 42.

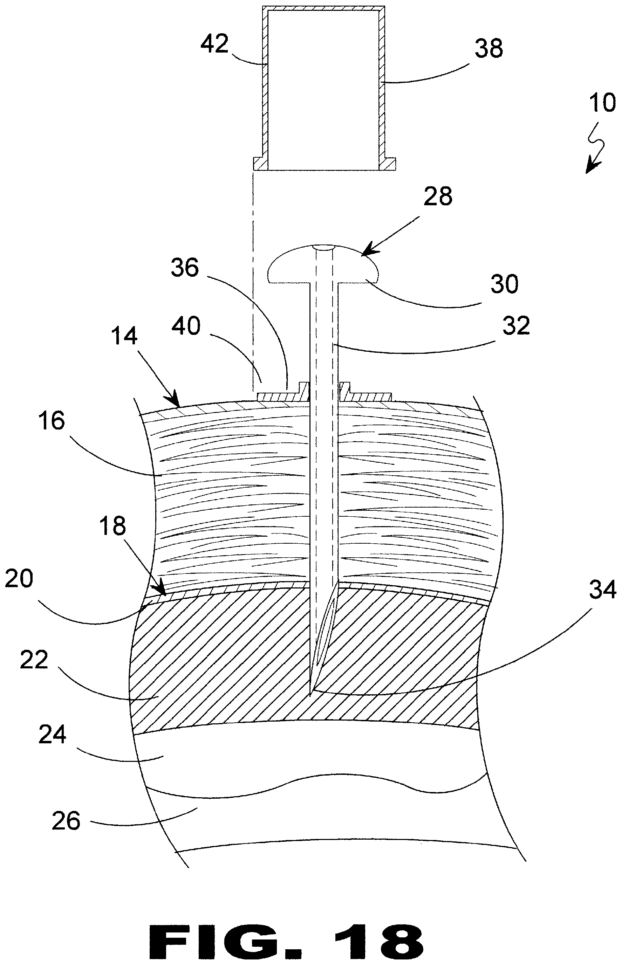

FIG. 18 is a sectional view of the coconut spigot partially inserted into the coconut. Illustrated is the cap seal and spigot cap 38 having flange 40 removed from its frictional engagement with grommet 36 thereby providing access to spigot 28, comprising spout 30, conduit 32 terminating in spike-tip 34 that has been positioned within coconut meat 22 of coconut 14 having husk 16 encompassing coconut seed 18 having coconut seed-case 20 where then the consumer can easily push spigot 28 through -1 i the remainder of coconut meat 22 into the coconut water cavity to access the sterile coconut water.

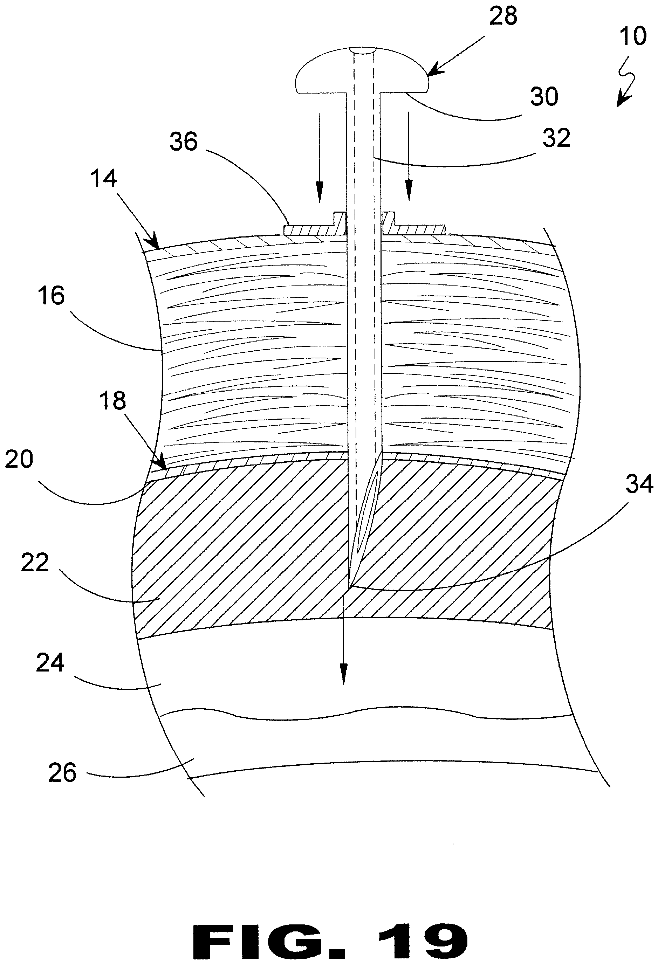

FIG. 19 is a sectional view of the coconut spigot partially inserted into the coconut. Illustrated is the cap seal and spigot cap 38 having flange 40 removed from its frictional engagement with grommet 36 thereby providing access to spigot 28, comprising spout 30, conduit 32 terminating in spike-tip 34 that has been positioned within coconut meat 22 of coconut 14 having husk 16 encompassing seed 18 having coconut seed-case 20 wherethen the consumer can easily push spigot 28 through the remainder of coconut meat 22 into the coconut water cavity to access the sterile coconut water.

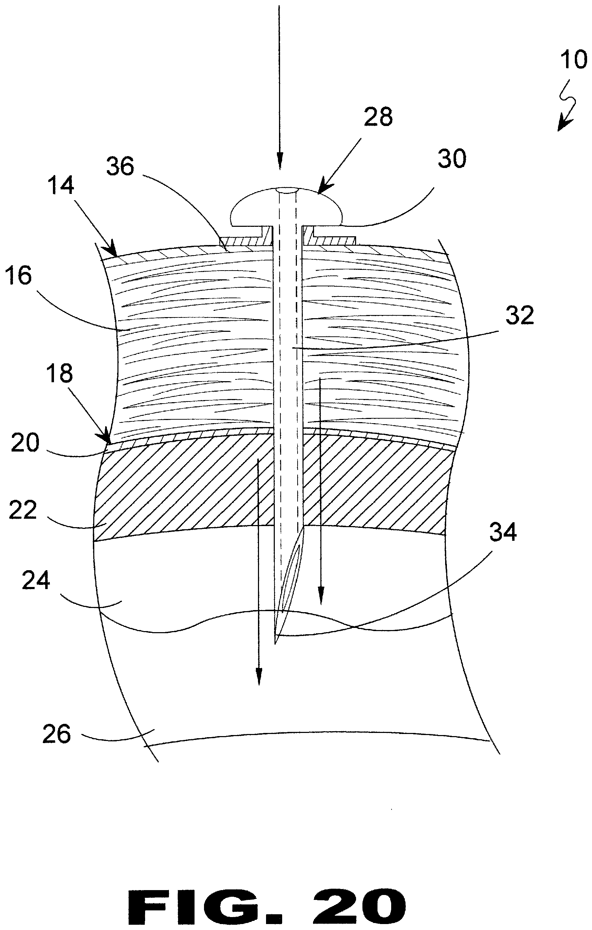

FIG. 20 is a sectional view of the coconut spigot fully inserted into the coconut cavity. Illustrated is spigot 28 comprising spout 30 and conduit 32 terminating in spike- tip 34 fully inserted through coconut meat 22 into the coconut cavity of coconut 14 having coconut husk 16 encompassing coconut seed 18 having coconut seed-case 20 thereby providing access to coconut water. Grommet 36 serves as attachment for the spigot cap and as a stop for completing the insertion of spigot 28 into the coconut cavity.

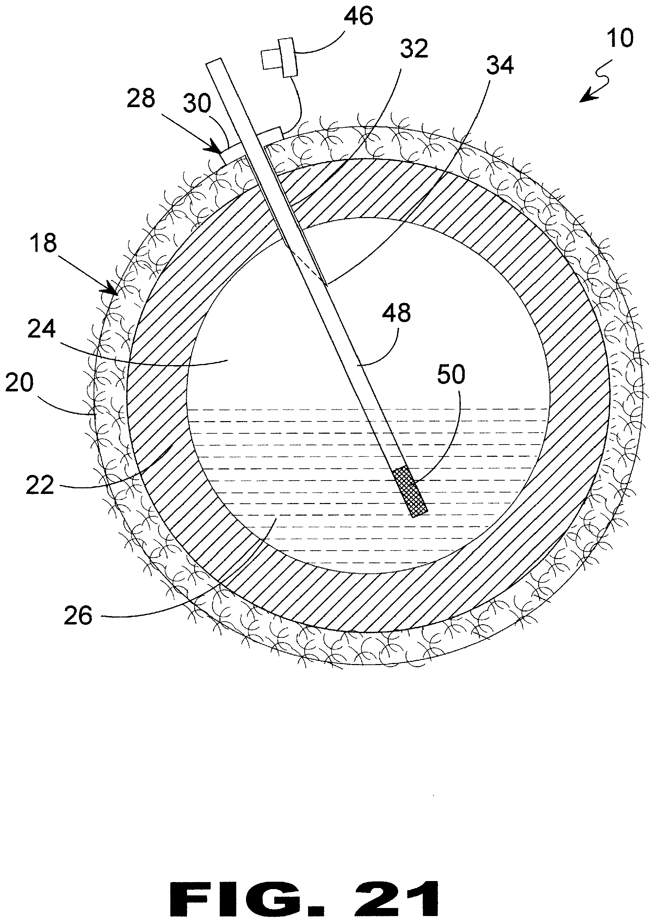

FIG. 21 is a sectional view of an additional element comprising closable grommet and straw. The present invention 10 alternately provides for spigot 28 having spout 30 with closable bung 46, conduit 32 terminating in spike-tip 34 placed through grommet 36 and coconut seed 18 having coconut seed-case 20 through coconut meat 22 and into coconut cavity 24 where then the consumer can extract the coconut water through straw 48 having filter 50 to prevent pulp from being drawn into the straw.

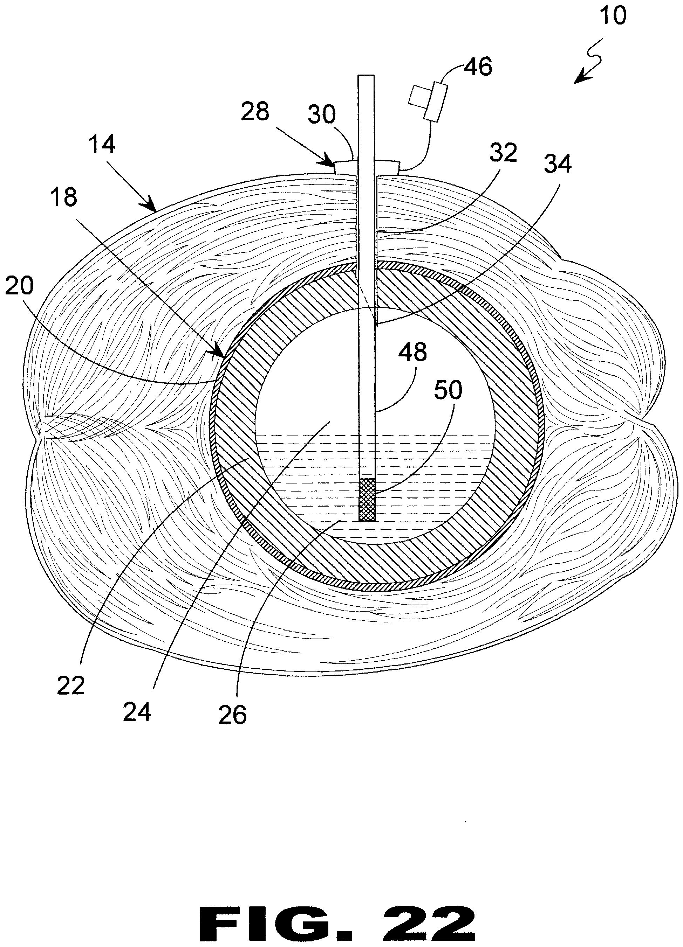

FIG. 22 is a sectional view of an additional element comprising closable grommet and straw. The present invention 10 also provides for spigot 28 having spout 30 with closable bung 46, conduit 32 terminating in spike-tip 34 placed through grommet 36 positioned on coconut 14 having husk 16 encompassing coconut seed 18 having coconut seed-case 20 through coconut meat 22 and into coconut cavity 24 where then the consumer can extract the coconut water through straw 48 having filter 50 to prevent pulp from being drawn into the straw.

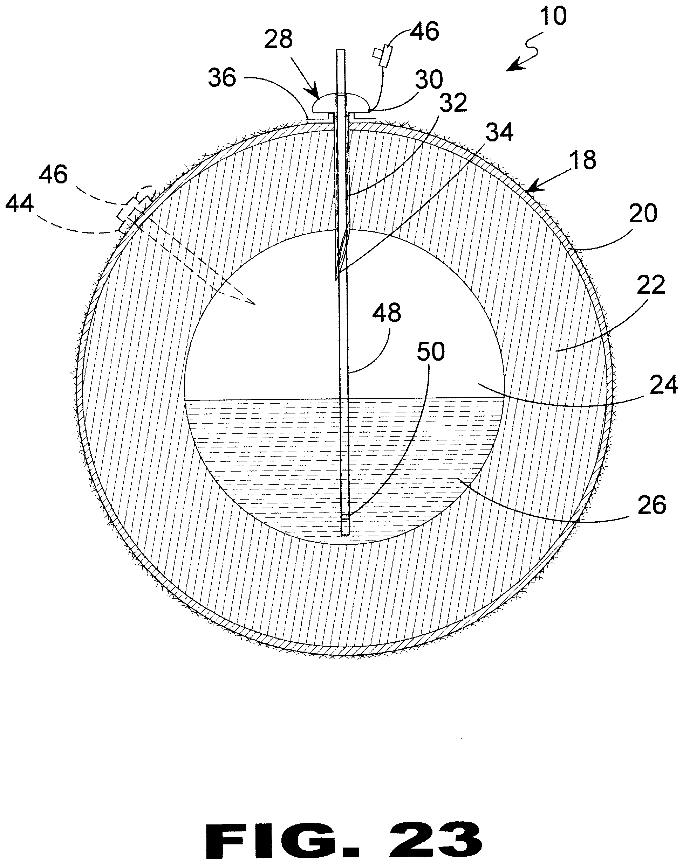

FIG. 23 is a sectional view of the coconut spigot inserted into the coconut water cavity. Illustrated is spigot 28 comprising spout 30 and conduit 32 terminating in spike- tip 34 fully inserted through coconut meat 22 into the coconut cavity 24 of coconut seed 18 having coconut seed-case 20 thereby providing access to coconut water 26 via straw 48 having filter 50. Grommet 36 serves as attachment for the spigot cap and as a stop for completing the insertion of spigot 28 into coconut cavity 24 with bung 46 serving as closure to keep any unconsumed coconut fresh.

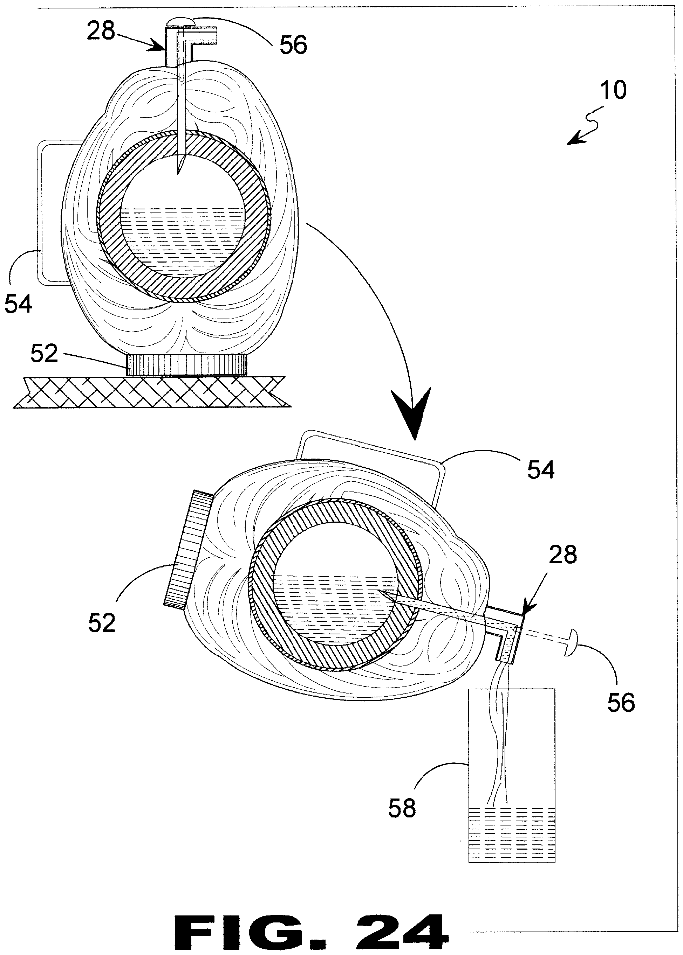

FIG. 24 is an illustrative view of additional elements of the present invention. More particularly, the present invention 10 provides for a coconut stand 52 and coconut handle 54 as a convenience for accessing the coconut water. Further provided is spigot 28 having a plunger 56 that seals spigot 28 to keep the coconut water fresh until the plunger is selectively removed from the spigot conduit where then the consumer can dispenses the coconut water into glass 58.

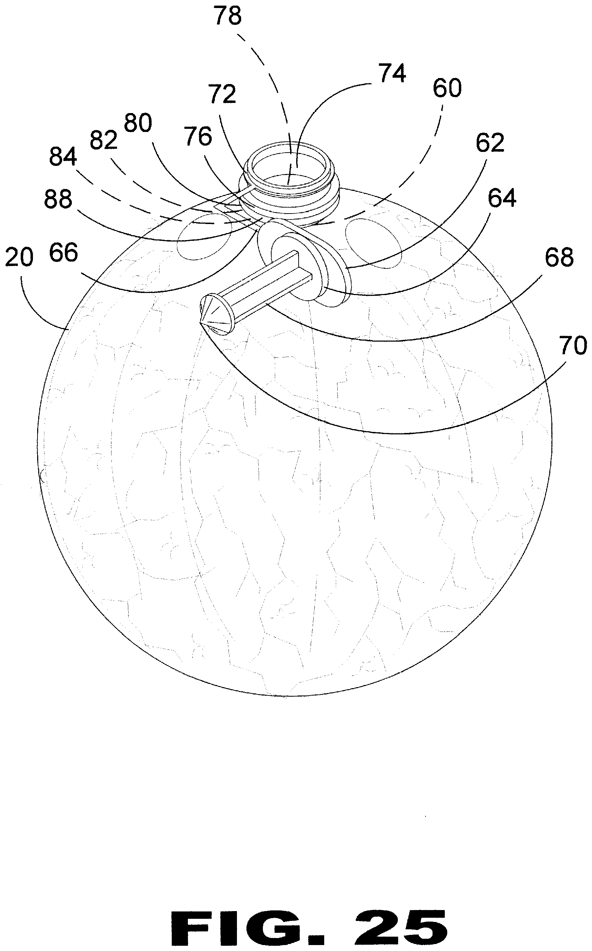

FIG. 25 is an illustrative view of an alternate embodiment not covered by the claims. Shown is coconut 20 having aperture 60 placed within the wall having a predetermined diameter so that valve plug 80 seats within said aperture with valve plug collar 82 substantially engaging the wall of aperture 60. Valve plug 80 has valve plug bore 84 for receiving plunger sleeve 72 having plunger sleeve bore 74 with a based positioned plunger sleeve membrane 78 that seals the coconut's contents until plunger stopper 62 having plunger-stopper lance 68 and plunger-stopper lance tip 70 is used to puncture plunger sleeve membrane 78 thereby providing access to the coconut water contained within the coconut. Plunger-stopper 62 is tethered via 66 to plunger sleeve 72. The plunger-stopper 72 serves to provide access to the coconut's contents and also serves as stopper to seal any remaining coconut contents for future use by providing plunger- stopper 64 that seals plunger sleeve bore 74.

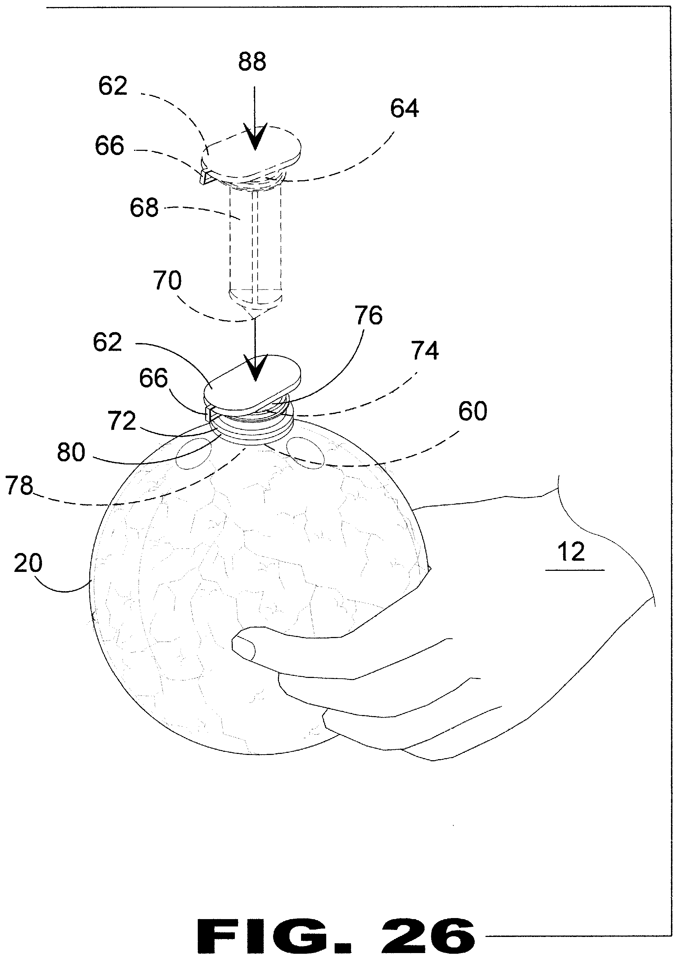

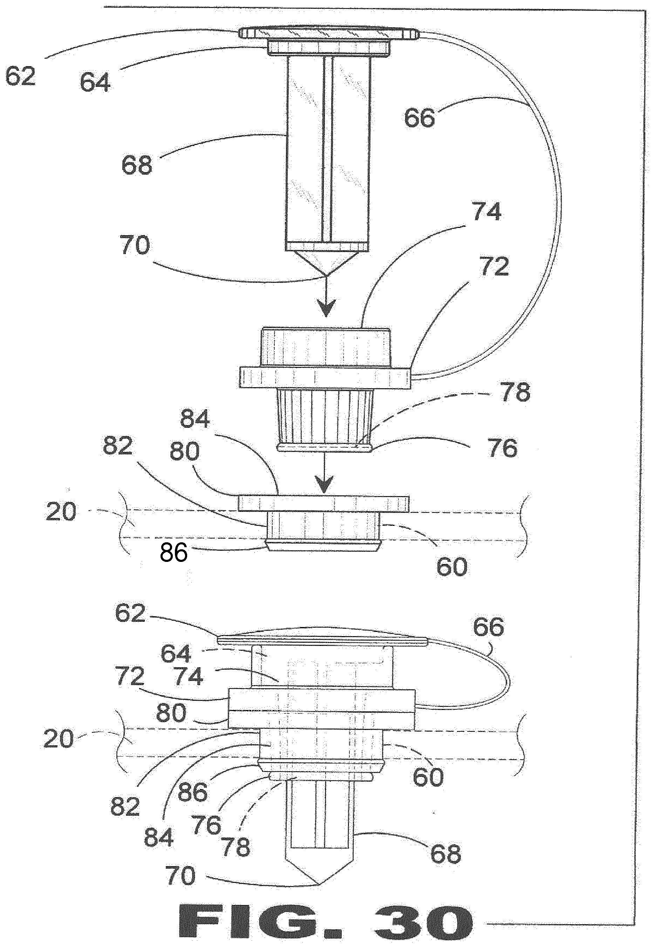

FIG. 26 is an illustrative view of the plunger-stopper providing access to the coconut water not covered by the claims. Coconut 20 has a tooled aperture 60 placed through the seed wall having a predetermined diameter so that valve plug 80 can be pressed into said aperture so that the valve plug collar 82 engages the top periphery wall of said coconut aperture 60 while the valve plug flange 86 engages the interior periphery wall of said coconut aperture 60. Plunger sleeve 72 is seated within valve plug bore 84, shown in figure 30, having a base positioned plunger sleeve membrane 78 that seals the coconut's contents.

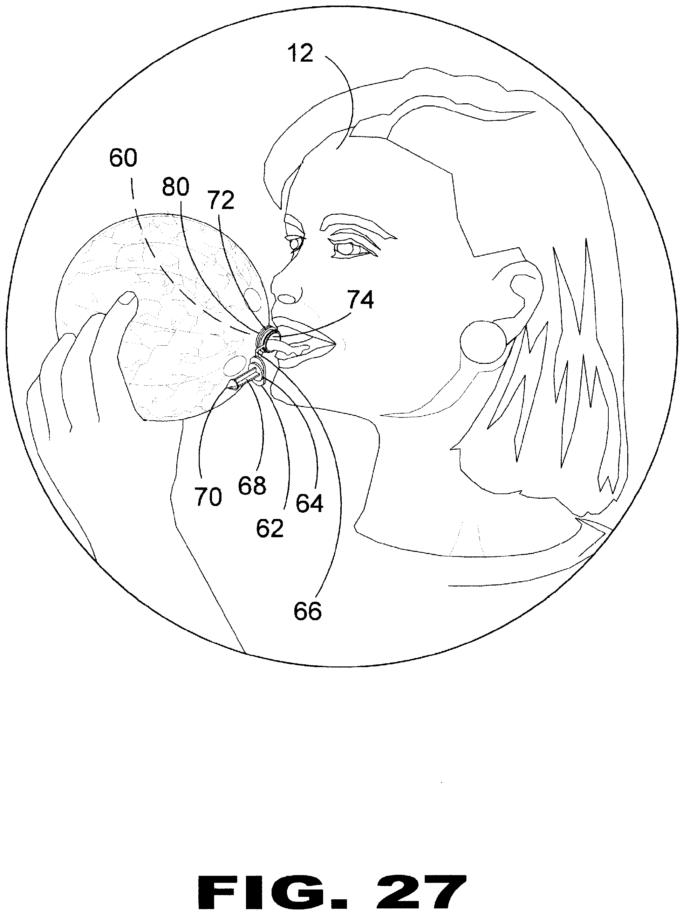

FIG. 27 is an illustrative view of the resealable spout in use not covered by the claims. The coconut water can be selectively accessed by user 12 once membrane 78 has been punctured using plunger-stopper tip 70. Plunger-stopper 62 also provides collar 64 having similar diameter as plunger sleeve bore 74 so that the bore spout can be resealed to preserve any remaining coconut water for future consumption.

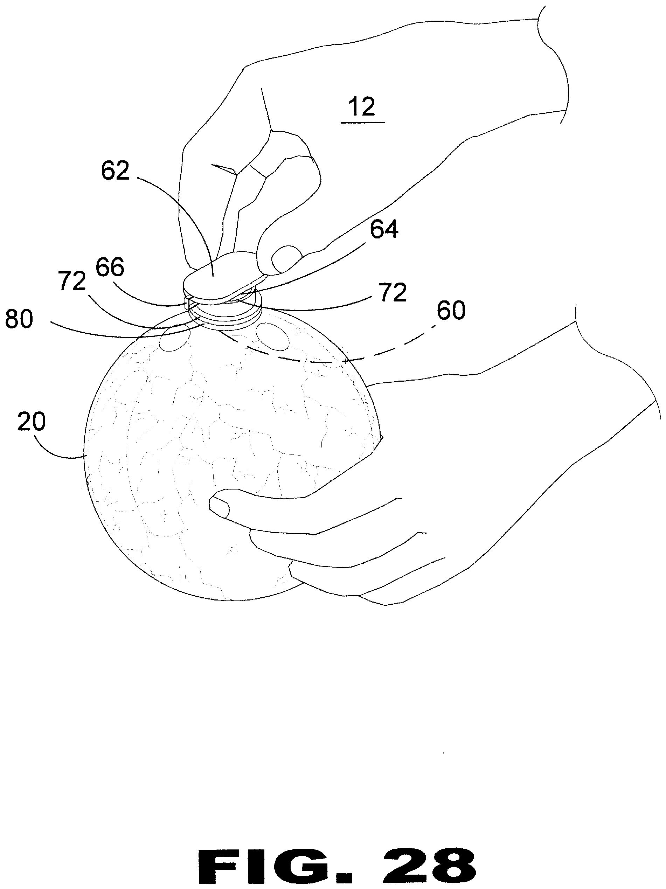

FIG. 28 is an illustrative view of the coconut resealed for future consumption not covered by the claims. Using the tethered plunger stopper 62, the user 12 can selectively pierce the plunger sleeve membrane 78 allowing access to a desired portion of the coconut water and then reseal the coconut by inserting plunger stopper 62 into the plunger sleeve bore 74 thereby preserving the coconut water for later consumption.

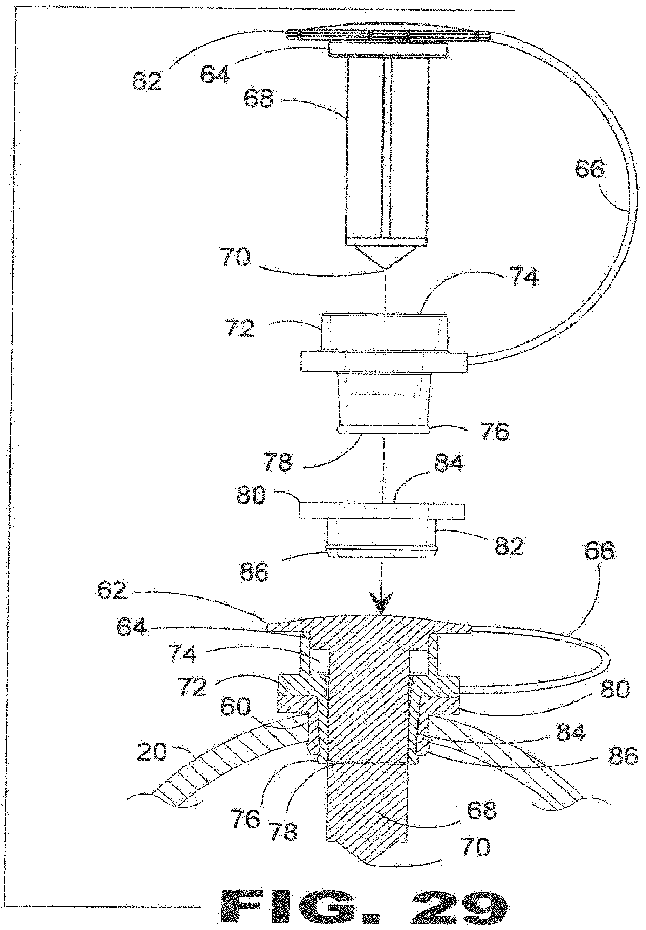

FIG. 29 is an illustrative view of an alternate embodiment not covered by the claims. Shown is coconut 20 having aperture 60 placed within the wall having a predetermined diameter so that valve plug 80 seats within said aperture with valve plug collar 82 substantially engaging the wall of aperture 60. Valve plug 80 has valve plug bore 84 for receiving plunger sleeve 72 having plunger sleeve bore 74 with a based positioned plunger sleeve membrane 78 that seals the coconut's contents until plunger stopper 62 having plunger-stopper lance 68 and plunger-stopper lance tip 70 is used to puncture plunger sleeve membrane 78 thereby providing access to the coconut water contained within the coconut. Plunger-stopper 62 is tethered via 66 to plunger sleeve 72. The plunger-stopper 72 serves to provide access to the coconut's contents and also serves as stopper to seal any remaining coconut contents for future use by providing plunger- stopper 64 that seals plunger sleeve bore 74.

FIG. 30 is an illustrative view of an alternate embodiment not covered by the claims. Shown is coconut 20 having aperture 60 placed within the wall having a predetermined diameter so that valve plug 80 seats within said aperture with valve plug collar 82 substantially engaging the wall of aperture 60. Valve plug 80 has valve plug bore 84 for receiving plunger sleeve 72 having plunger sleeve bore 74 with a based positioned plunger sleeve membrane 78 that seals the coconut's contents until plunger stopper 62 having plunger-stopper lance 68 and plunger-stopper lance tip 70 is used to puncture plunger sleeve membrane 78 thereby providing access to the coconut water contained within the coconut. Plunger-stopper 62 is tethered via 66 to plunger sleeve 72. The plunger-stopper 72 serves to provide access to the coconut's contents and also serves as stopper to seal any remaining coconut contents for future use by providing plunger- stopper 64 that seals plunger sleeve bore 74.

While only several embodiments of the present invention have been shown and described, it will be obvious to those skilled in the art that many modifications may be made to the present invention without departing from the scope thereof as defined by the appended claims.

### List of Reference Numerals

- 10: Coconut With Spigot of the present invention
- 12: consumer
- 14: coconut
- 16: coconut husk
- 18: coconut seed
- 20: coconut seed-case
- 22: coconut meat
- 24: coconut seed-case cavity
- 26: coconut water
- 26: spigot
- 28: spout
- 32: conduit
- 34: spike-tip
- 36: grommet
- 38: spigot cap
- 40: cap flange
- 42: cap seal
- 44: air valve
- 46: tethered bung
- 48: straw
- 50: straw filter
- 52: stand
- 54: handle
- 56: plunger
- 58: glass
- 60: coconut aperture
- 62: plunger-stopper
- 64: plunger-stopper collar
- 66: plunger-stopper tether
- 68: plunger-stopper lance
- 70: plunger-stopper lance tip
- 72: plunger sleeve
- 74: plunger sleeve bore
- 76: plunger sleeve flange
- 78: plunger sleeve membrane
- 80: valve plug
- 82: valve plug collar
- 84: valve plug bore
- 86: valve plug flange
- 86: direction of pressure on plunger

## Claims

1. A method for accessing and removing the sterile water (26) within a coconut (14), having a seed-case (20), a layer of coconut meat (22) inside of the seed-case, and an internal cavity (24) containing sterile coconut water (26), in a condition that is ready for a consumer to easily access and remove the coconut water within the coconut, wherein the sterility of the coconut water has not been compromised during shipping, handling and/or storage of the coconut, the method including the steps of:
inserting through the seed-case (20) of the coconut a spigot (28), wherein the spigot (28) is partially inserted into the coconut meat (22) in a manner in which the spigot (28) does not pierce the coconut water cavity (24); and
providing cover means for stopping further casual insertion of the spigot (28) into the coconut (14) during shipping and handling, whereby a consumer can easily access and remove the sterile water within the coconut by disabling the cover means and pushing the partially inserted spigot (28) through the remainder of the coconut meat (22) and into the water cavity (24) to access the sterile water (26).

2. The method as recited in Claim 1, wherein the spigot (28) comprises a conduit (32) having a spike-tip (34) on one end and a spout (30) on the other with a through bore therebetween, the method further including the step of providing on the outer surface of the coconut (14) a grommet (36) provided as an insertion stop for the spigot (28).

3. The method as recited in Claim 2, wherein the the spigot (28) comprises a plunger (56) that is movable from a blocking position to an unblocking position so that the coconut water can be poured into a glass.

4. The method as recited in Claim 1, further comprising the step of inserting an air valve (44) through the coconut meat and into the internal cavity (24) of the coconut and further comprising the step of providing a tethered bung (46) forming an air valve closure.

5. The method as recited in Claim 1, wherein the spigot (28) includes a conduit within it.

6. The method as recited in Claim 1, wherein said coconut is huskless.

7. The method as recited in Claim 2, wherein the cover means for stopping further casual insertion of the spigot (28) into the coconut (14) during shipping and handling comprises a cap (38) that covers the spigot (28) and engages with the grommet (36).

8. The method as recited in Claim 7, further comprising the step of placing a tamper-evident cap seal (42) over cap (38).

9. A consumer-ready coconut product having a seed-case (20), a layer of coconut meat (22) inside of the seed-case, and an internal cavity (24) containing sterile coconut water (26), the product being in a condition that is ready for a consumer to easily access and remove the coconut water within the coconut, wherein the sterility of the coconut water has not been compromised during shipping, handling and/or storage of the coconut, the product comprising:
a coconut (14) having inserted through its seed-case (20) a spigot (28), wherein the spigot (28) is partially inserted into the coconut meat (22) in a manner in which the spigot (28) does not pierce the coconut water cavity (24); and
a cover means for stopping further casual insertion of the spigot (28) into the coconut (14) during shipping and handling, whereby
a consumer can easily access and remove the sterile water within the coconut by disabling the cover means and pushing the partially inserted spigot (28) through the remainder of the coconut meat (22) and into the water cavity (24) to access the sterile water (26).

10. The consumer-ready coconut product as recited in Claim 9, wherein the spigot (28) comprises a conduit (32) having a spike-tip (34) on one end and a spout (30) on the other with a through bore therebetween, the coconut product further including a grommet (36) on the outer surface of the coconut (14) and wherein the spigot (28) is inserted through the grommet (36).

11. The consumer-ready coconut product as recited in Claim 9, wherein the spigot (28) includes a conduit within it.

12. The consumer-ready coconut product as recited in Claim 10, wherein the cover means comprises a cap (38) for preventing displacement of the partially inserted spigot (28) during shipping and handling comprises a cap (38) that covers the spigot (28) and engages with the grommet (36).

13. The consumer-ready coconut product as recited in Claim 12, further comprising a tamper-evident cap seal (42) over cap (38).

14. The consumer-ready coconut product as recited in Claim 11, further comprising an air valve (44) extending through the coconut meat and into the internal cavity (24) of the coconut, and a tethered bung (46) forming an air valve closure.

## Patentansprüche

1. Verfahren zum Zugreifen auf und Entnehmen von sterilem Wasser (26) in einer Kokosnuss (14), die ein Samengehäuse (20), eine Schicht aus Kokosnussfruchtfleisch (22) im Inneren des Samengehäuses und einen inneren Hohlraum (24) aufweist, der steriles Kokosnusswasser (26) enthält, in einem Zustand, in dem ein Verbraucher auf das Kokosnusswasser in der Kokosnuss leicht zugreifen und das Kokosnusswasser entnehmen kann, wobei die Sterilität des Kokosnusswassers während des Transports, der Handhabung und/oder der Lagerung der Kokosnuss nicht beeinträchtigt worden ist, wobei das Verfahren die Schritte aufweist:
Einführen eines Zapfens (28) durch das Samengehäuse (20) der Kokosnuss, wobei der Zapfen (28) teilweise in das Kokosnussfruchtfleisch (22) derart eingeführt wird, dass der Zapfen (28) nicht in den Kokosnusswasserhohlraum (24) eindringt; und
Bereitstellen einer Abdeckeinrichtung zum Stoppen eines weiteren zufälligen Eindringens des Zapfens (28) in die Kokosnuss (14) während des Transports und der Handhabung, wodurch ein Verbraucher leicht auf das sterile Wasser in der Kokosnuss zugreifen und es entnehmen kann, indem die Abdeckeinrichtung deaktiviert und der teilweise eingeführte Zapfen (28) durch den Rest des Kokosnussfruchtfleischs (22) und in den Wasserhohlraum (24) gedrückt wird, um auf das sterile Wasser (26) zuzugreifen.

2. Verfahren nach Anspruch 1, wobei der Zapfen (28) einen Rohrabschnitt (32) mit einer Dornspitze (34) an einem Ende und einem Kopfabschnitt (30) am anderen Ende mit einem Durchgangsloch dazwischen aufweist, wobei das Verfahren ferner den Schritt zum Bereitstellen einer Durchführung (36), die als ein Einführanschlag für den Zapfen (28) vorgesehen ist, auf der Außenfläche der Kokosnuss (14) aufweist.

3. Verfahren nach Anspruch 2, wobei der Zapfen (28) einen Kolben (56) aufweist, der von einer Sperrposition zu einer entsperrten Position bewegbar ist, so dass das Kokosnusswasser in ein Glas gegossen werden kann.

4. Verfahren nach Anspruch 1, ferner mit dem Schritt zum Einführen eines Luftventils (44) durch das Kokosnussfruchtfleisch und in den inneren Hohlraum (24) der Kokosnuss und ferner mit dem Schritt zum Bereitstellen eines angebundenen Stöpsels (46), der einen Luftventilverschluss bildet.

5. Verfahren nach Anspruch 1, wobei im Zapfen (28) ein Kanal ausgebildet ist.

6. Verfahren nach Anspruch 1, wobei die Kokosnuss schalenlos ist.

7. Verfahren nach Anspruch 2, wobei die Abdeckeinrichtung zum Stoppen des weiteren zufälligen Einführens des Zapfens (28) in die Kokosnuss (14) während des Transports und der Handhabung eine Kappe (38) aufweist, die den Zapfen (28) abdeckt und mit der Durchführung (36) in Eingriff steht.

8. Verfahren nach Anspruch 7, ferner mit dem Schritt zum Anordnen einer manipulationssicheren Kappendichtung (42) über der Kappe (38).

9. Verbrauchsfertiges Kokosnussprodukt mit einem Samengehäuse (20), einer Schicht Kokosnussfruchtfleisch (22) innerhalb des Samengehäuses und einem inneren Hohlraum (24), der steriles Kokosnusswasser (26) enthält, wobei das Produkt sich in einem Zustand befindet, in dem ein Verbraucher auf das Kokosnusswasser in der Kokosnuss leicht zugreifen und es entnehmen kann, wobei die Sterilität des Kokosnusswassers während des Transports, der Handhabung und/oder der Lagerung der Kokosnuss nicht beeinträchtigt worden ist, wobei das Produkt aufweist:
eine Kokosnuss (14), durch deren Samengehäuse (20) ein Zapfen (28) eingeführt worden ist, wobei der Zapfen (28) teilweise in das Kokosnussfruchtfleisch (22) derart eingeführt ist, dass der Zapfen (28) nicht in den Kokosnusswasserhohlraum (24) eindringt; und
eine Abdeckeinrichtung zum Stoppen des weiteren zufälligen Einführens des Zapfens (28) in die Kokosnuss (14) während des Transports und der Handhabung, wodurch
ein Verbraucher leicht auf das sterile Wasser in der Kokosnuss zugreifen und es entnehmen kann, indem die Abdeckeinrichtung deaktiviert wird und der teilweise eingeführte Zapfen (28) durch den Rest des Kokosnussfruchtfleisches (22) und in den Wasserhohlraum (24) gedrückt wird, um auf das sterile Wasser (26) zuzugreifen.

10. Verbrauchsfertiges Kokosnussprodukt nach Anspruch 9, wobei der Zapfen (28) einen Rohrabschnitt (32) mit einer Dornspitze (34) an einem Ende und einem Kopfabschnitt (30) am anderen Ende mit einem Durchgangsloch dazwischen aufweist, wobei das Kokosnussprodukt ferner eine Durchführung (36) auf der Außenfläche der Kokosnuss (14) aufweist, und wobei der Zapfen (28) durch die Durchführung (36) eingeführt wird.

11. Verbrauchsfertiges Kokosnussprodukt nach Anspruch 9, wobei der Zapfen (28) einen Kanal aufweist.

12. Verbrauchsfertiges Kokosnussprodukt nach Anspruch 10, wobei die Abdeckeinrichtung eine Kappe (38) zum Verhindern eines Versatzes des teilweise eingeführten Zapfens (28) während des Transports und der Handhabung aufweist, wobei die Kappe (38) den Zapfen (28) abdeckt und mit der Durchführung (36) in Eingriff steht.

13. Verbrauchsfertiges Kokosnussprodukt nach Anspruch 12, ferner mit einer manipulationssicheren Kappendichtung (42) über der Kappe (38).

14. Verbrauchsfertiges Kokosnussprodukt nach Anspruch 11, ferner mit einem Luftventil (44), das sich durch das Kokosnussfruchtfleisch und in den inneren Hohlraum (24) der Kokosnuss erstreckt, und mit einem angebundenen Stöpsel (46), der einen Luftventilverschluss bildet.

## Revendications

1. Procédé d'accès et de retrait de l'eau stérile (26) à l'intérieur d'une noix de coco (14), ayant une cosse à graine (20), une couche de chair de noix de coco (22) à l'intérieur de la cosse à graine, et une cavité (24) interne contenant de l'eau de noix de coco (26) stérile, dans un état qui est prêt pour qu'un consommateur accède facilement et retire l'eau de noix de coco à l'intérieur de la noix de coco, où la stérilité de l'eau de noix de coco n'a pas été compromise durant le transport par bateau, la manipulation et/ou le stockage de la noix de coco, le procédé comportant les étapes :
d'insertion d'un fausset (28) à travers la cosse à graine (20) d'une noix de coco, où le fausset (28) est partiellement inséré dans la chair de noix de coco (22) de manière à ce que le fausset (28) ne perce pas la cavité (24) d'eau de noix de coco ; et
de mise en place d'un moyen de couverture pour arrêter une nouvelle insertion occasionnelle du fausset (28) dans la noix de coco (14) durant le transport par bateau et la manipulation, ce par quoi un consommateur peut facilement accéder et retirer l'eau stérile à l'intérieur de la noix de coco en désactivant le moyen de couverture et en poussant le fausset (28) partiellement inséré à travers le reste de la chair de noix de coco (22) et à l'intérieur de la cavité (24) d'eau pour accéder à l'eau stérile (26).

2. Procédé selon la revendication 1, dans lequel le fausset (28) comprend un conduit (32) ayant une pointe d'extrémité (34) à une extrémité et un bec (30) à l'autre avec un alésage entre eux, le procédé comportant en outre l'étape de mise en place d'un oeillet (36) sur la surface extérieure de la noix de coco (14) fournissant une butée d'insertion pour le fausset (28).

3. Procédé selon la revendication 2, dans lequel le fausset (28) comprend un plongeur (56) qui peut se déplacer à partir d'une position de blocage à une position de déblocage de sorte que l'eau de noix de coco peut être versée dans un verre.

4. Procédé selon la revendication 1, comprenant en outre l'étape d'insertion d'un clapet de mise à l'air (44) à travers la chair de noix de coco et jusqu'à l'intérieur de la cavité (24) interne de la noix de coco et comprenant en outre l'étape de fourniture d'un bouchon (46) rivé formant une fermeture de clapet de mise à l'air.

5. Procédé selon la revendication 1, dans lequel le fausset (28) comporte un conduit à l'intérieur.

6. Procédé selon la revendication 1, dans lequel ladite noix de coco est exempte de coque.

7. Procédé selon la revendication 2, dans lequel le moyen de couverture pour arrêter une autre insertion occasionnelle du fausset (28) dans la noix de coco (14) durant le transport par bateau et la manipulation comprend un capuchon (38) qui recouvre le fausset (28) et s'engage avec l'oeillet (36).

8. Procédé selon la revendication 7, comprenant en outre l'étape de mise en place d'un joint (42) de capuchon inviolable pardessus le capuchon (38).

9. Produit de noix de coco prêt à consommer ayant une cosse à graine (20), une couche de chair de noix de coco (22) à l'intérieur de la cosse à graine, et une cavité (24) interne contenant de l'eau de noix de coco (26) stérile, le produit étant dans un état qui est prêt pour qu'un consommateur accède facilement et retire l'eau de noix de coco à l'intérieur de la noix de coco, où la stérilité de l'eau de noix de coco n'a pas été compromise durant le transport par bateau, la manipulation et/ou le stockage de la noix de coco, le produit comprenant :
une noix de coco (14) ayant un fausset (28) inséré à travers sa cosse à graine (20), où le fausset (28) est partiellement inséré dans la chair de noix de coco (22) de manière à ce que le fausset (28) ne perce pas la cavité (24) d'eau de noix de coco ; et
un moyen de couverture pour arrêter une nouvelle insertion occasionnelle du fausset (28) dans la noix de coco (14) durant le transport par bateau et la manipulation, ce par quoi
un consommateur peut facilement accéder et retirer l'eau stérile à l'intérieur de la noix de coco en désactivant le moyen de couverture et en poussant le fausset (28) partiellement inséré à travers le reste de la chair de noix de coco (22) et à l'intérieur de la cavité (24) d'eau pour accéder à l'eau stérile (26).

10. Produit de noix de coco prêt à consommer selon la revendication 9, dans lequel le fausset (28) comprend un conduit (32) ayant une pointe d'extrémité (34) à une extrémité et un bec (30) à l'autre extrémité avec un alésage à travers ceux-ci, le produit de noix de coco comportant en outre un oeillet (36) sur la surface extérieure de la noix de coco (14) et où le fausset (28) est inséré à travers l'oeillet (36).

11. Produit de noix de coco prêt à consommer selon la revendication 9, dans lequel le fausset (28) comporte un conduit à l'intérieur.

12. Produit de noix de coco prêt à consommer selon la revendication 10, dans lequel le moyen de couverture comprend un capuchon (38) pour empêcher un déplacement du fausset (28) partiellement inséré durant le transport par bateau et la manipulation et comprend un capuchon (38) qui recouvre le fausset (28) et s'engage avec l'oeillet (36).

13. Produit de noix de coco prêt à consommer selon la revendication 12, comprenant en outre un joint (42) de capuchon inviolable pardessus le capuchon (38).

14. Produit de noix de coco prêt à consommer selon la revendication 11, comprenant en outre un clapet de mise à l'air (44) s'étendant à travers la chair de noix de coco et à l'intérieur de la cavité (24) interne de la noix de coco, et un bouchon (46) rivé formant une fermeture de clapet de mise à l'air.
